Europäisches Patentamt

European Patent Office

Office européen des brevets

(11) Numéro de publication: **0 300 841 B1**

## (12) FASCICULE DE BREVET EUROPEEN

(45) Date de publication de fascicule du brevet: **30.09.92**  (51) Int. Cl.⁵: **G06K 11/06, G01B 7/03**

(21) Numéro de dépôt: **88401252.7**

(22) Date de dépôt: **24.05.88**

(54) Dispositif de détection de position d'un organe de commande sur une tablette tactile.

(30) Priorité: **25.05.87 FR 8707323**

(43) Date de publication de la demande:
**25.01.89 Bulletin 89/04**

(45) Mention de la délivrance du brevet:
**30.09.92 Bulletin 92/40**

(84) Etats contractants désignés:
**DE GB IT**

(56) Documents cités:
**FR-A- 2 538 581**
**US-A- 3 657 475**

**MESURES REGULATION AUTOMATISME, vol. 42, no. 9, septembre 1977, pages 69-73; C. PIGUET et al.: "Entrée de données pour montre multifonctionnelle"**

**IBM TECHNICAL DISCLOSURE BULLETIN, vol. 23, no. 6, novembre 1980, page 2341, New York, US; H.S. HOFFMAN, Jr.: "Exact position detection with finger point and feedback"**

**PATENT ABSTRACTS OF JAPAN, vol. 8, no. 248 (P-313)[1685], 14 novembre 1984; & JP-A-59 121 484 (CASIO KEISANKI K.K.) 13-07-1984**

(73) Titulaire: **SEXTANT AVIONIOUE S.A.**
**Immeuble le Galilée Parc Tertiaire de Meudon 5/7 rue Jeanne Braconnier**
**F-92366 Meudon la Forêt Cédex(FR)**

(72) Inventeur: **Gruaz, Daniel**
**53 rue du Petit Pont**
**F-78180 Montigny le Bretonneux(FR)**
Inventeur: **Marchal, Claude**
**6 ruelle du Loup**
**F-78890 Garancieres(FR)**

(74) Mandataire: **Bloch, Gérard et al**
**2, square de l'Avenue du Bois**
**F-75116 Paris(FR)**

## Description

La présente invention concerne un dispositif de détection de position d'un organe d'commande sur une tablette.

On connaît des dispositifs de détection de position d'un organe de commande sur une tablette, par exemple pour la commande de la position d'un pointeur sur un écran vidéo associé à un ordinateur, la position de l'organe de commande sur la tablette servant finalement à sélectionner une fonction de l'ordinateur ou à modifier une donnée contenue dans l'ordinateur. Il est important de pouvoir différencier un grand nombre de points de commandes sur la tablette afin de disposer d'un grand choix de sélection d'une fonction ou d'une donnée associée. Dans le cas d'une tablette magnétique à laquelle est associé un crayon de commande, il est possible, dans certaines limites, d'augmenter le nombre de points de commandes différenciés en diminuant la section sensible du crayon.

Dans le cas d'une tablette tactile, l'organe de commande est un doigt de l'opérateur ayant des caractéristiques de dimensions propres à chaque opérateur et sur lesquelles il n'est pas possible d'agir.

Un but de la présente invention est de proposer un dispositif de détection de position d'un organe de commande sur une tablette tactile présentant un temps de réponse très court.

En vue de la réalisation de ce but, on prévoit selon l'invention un dispositif de détection comportant les caractéristiques specifiées dans la Revendication 1.

Le document FR-A-2 538 581 décrit un dispositif permettant de déterminer la position d'un doigt entre les plages de détection.

Dans ce document connu le choix des plages à traiter s'effectue en sélectionnant tout d'abord celle des plages qui possède le plus fort degré de recouvrement, puis en sélectionnant impérativement les plages situées respectivement au-dessus, au-dessous, à gauche et à droite de la première plage sélectionnée.

Au contraire, dans l'invention, seul le nombre de plages à sélectionner est prédéterminé, leur choix s'effectuant dans l'ordre des degrés de recouvrement les plus élevés, indépendamment de la position respective des différentes plages.

Il en résulte une bien meilleure prise en compte des plages significatives que dans le dernier document connu, y compris pour un nombre de plages inférieur, et par conséquent des traitements numériques plus simples.

D'autres caractéristiques et avantages de l'invention apparaîtront encore à la lumière de la description qui suit d'un mode de réalisation particulier non limitatif de l'invention en liaison avec les figures ci-jointes parmi lesquelles :

- la figure 1 est une représentation schématique du dispositif de détection de position selon l'invention.
- la figure 2 est une vue en coupe partielle de la tablette tactile.
- la figure 3 est une représentation schématique d'un circuit de détection de recouvrement d'une plage de détection.
- la figure 4 est un graphique illustrant le procédé de détermination de la position de l'organe de commande à partir des mesures effectuées.

En référence aux figures, le dispositif selon l'invention comprend une tablette tactile généralement désignée en 1 comportant une série de plages de détection formées par une plaque de mesure métallique 2 disposée à la surface d'un circuit imprimé multi-couches, de préférence recouverte d'une couche protectrice isolante 3.

A chaque plaque de mesure 2 est associé un circuit analogique capacitif destiné à mesurer le degré de recouvrement de chaque plage par l'organe de commande formé par le doigt d'un utilisateur. Chaque circuit analogique capacitif comprend une première diode 4 et une seconde diode 5 reliées en série l'une à l'autre. La première diode 4 a sa borne d'entrée reliée la masse de la tablette tactile 1 et la seconde diode 5 a sa borne de sortie reliée à une borne de sortie 6 de la tablette. Les deux diodes 4 et 5 sont disposées pour conduire depuis la masse de la tablette vers la borne de sortie 6. La plaque de mesure 2 est reliée aux diodes 4 et 5 en un point intermédiaire de la ligne reliant ces deux diodes. Le point intermédiaire entre les diodes 4 et 5 est également relié à une borne d'alimentation 7 par l'intermédiaire d'un condensateur 8. Lorsqu'il est alimenté, le circuit analogique émet donc un signal de sortie dont l'amplitude est proportionnelle au degré de recouvrement de la plaque de mesure 2 par le doigt de l'utilisateur. En pratique, la masse de la plaquette tactile est constituée par une couche 9 du circuit imprimé multicouches formant la plaquette, les lignes d'alimentation, de sortie et de liaison étant constituées par des circuits 10, 11, 12 séparés les uns des autres et du circuit de masse par des couches isolantes 13. Les composants du circuit de mesure sont de préférence des composants de surface fixés sur une surface de la tablette opposée aux plaques de mesure 2.

Les bornes de sortie 6 de chaque circuit de mesure analogique sont reliées à un convertisseur analogique - numérique 14 disposé entre la tablette tactile 1 et un ordinateur 15 lui-même relié à un écran vidéo 16.

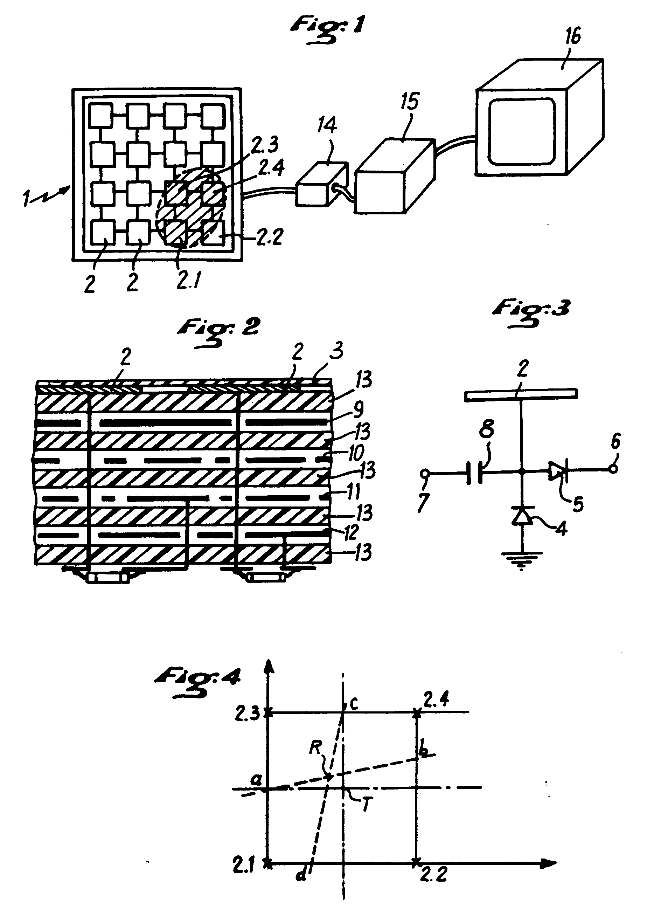

L'ordinateur est programmé pour effectuer un balayage cyclique des plages de détection 2, c'est-à-dire pour envoyer un signal d'alimentation successivement à chacune des bornes d'entrée 7 des circuits analogiques de mesure et recueillir le signal de sortie 6 correspondant qui est mis en mémoire. Selon le mode de réalisation préféré de l'invention, l'ordinateur sélectionne ensuite pour chaque cycle de balayage les quatre plages de détection qui ont donné le signal de sortie le plus élevé. Dans l'exemple illustré par la figure 1, la position du doigt de l'opérateur a été représentée par une zone pointillée hachurée et les plages de détection correspondantes ont été référencées 2.1, 2.2, 2.3 et 2.4. Les mêmes références numériques sont portées sur le graphique de la figure 4. Lorsque les 4 plages de plus haut niveau de sortie ont été sélectionnées, l'ordinateur effectue un déplacement d'origine pour venir placer l'origine sur l'une des plages de détection sélectionnée, par exemple la plage 2.1 dans l'exemple illustré. Si l'on effectuait alors une recherche d'un point médian correspondant aux plages de détection sélectionnées, on aboutirait à un point T équidistant des quatre sommets du carré formé par les plages sélectionnées. Pour obtenir une meilleure précision du positionnement, on applique à chaque sommet du carré un coefficient inversement proportionnel à l'amplitude du signal de sortie mémorisé pour les plages sélectionnées. Si l'on désigne par A1 l'amplitude du signal de sortie de la plage 2.1, A2 l'amplitude du signal de sortie de la plage 2.2, A3 l'amplitude du signal de sortie de la plage 2.3, et A4 l'amplitude du signal de sortie de la plage 2.4, on détermine donc un point a qui a pour ordonnée, à une constante près, $\overline{A3} / (A1 + A3)$,, un point b qui a l'abscisse de la plage 2.2 et une ordonnée égale à $A4 / (A2 + A4)$, un point c qui a l'ordonnée de la plage 2.3 et pour abscisse $\overline{A4} / (A3 + A4)$, et un point d qui a une ordonnée nulle et une abscisse égale $\overline{a}$ $A2 / (A1 + A2)$. L'intersection des lignes a, b et c, d donne alors le point R qui est représentatif de la position réelle du doigt sur la tablette. La position du point R sert par exemple à déplacer un pointeur sur l'écran vidéo 16 ou à donner une valeur à une donnée dont la valeur est fonction de la position du doigt de l'opérateur sur la tablette.

Bien que la tablette 1 ait été représentée sur la figure 1, avec seulement 16 plages de détection 2, on comprendra que dans la réalité la tablette sera généralement réalisée avec un beaucoup plus grand nombre de plages de détection. La finesse de la détection du point R étant donnée par le degré de résolution possible en fonction du convertisseur analogique - numérique utilisé.

Bien entendu l'invention n'est pas limitée au mode de réalisation décrit et on peut effectuer différentes variantes de réalisation sans sortir du cadre de l'invention. En particulier, on peut utiliser un circuit analogique inductif au lieu du circuit analogique capacitif décrit. On peut également remplacer le coefficient inversement proportionnel à l'amplitude de sortie du signal détecté par un coefficient approprié à une application donnée.

## Revendications

1. Dispositif de détection de position d'un organe de commande sur une tablette tactile (1) comportant une série de plages de détection capacitives (2), un circuit capacitif analogique (2,4,5,8) pour affecter à chaque plage un coefficient de détection en fonction d'une amplitude d'un signal émis par le circuit capacitif, cette amplitude étant elle-même fonction d'un degré de recouvrement de la plage de détection par l'organe de commande, des moyens de sélection pour sélectionner des plages de détection, et des moyens pour déterminer un point médian (R) des plages de détection sélectionnées affectées de leur coefficient de détection, caractérisé en ce que les moyens de sélection sont agencés pour sélectionner un nombre prédéterminé de plages de détection (2) ayant les degrés de recouvrement les plus élevés parmi toutes les plages de détection.

2. Dispositif selon la revendication 1, caractérisé en ce qu'il comporte des moyens pour affecter une origine à l'une des plages (2.1) ayant un degré de recouvrement élevé.

3. Dispositif selon la revendication 1, caractérisé en ce que le coefficient de détection affecté à une plage de détection est inversement proportionnel au degré de recouvrement de cette plage.

4. Dispositif selon la revendication 1, caractérisé en ce que chaque circuit capacitif comporte une plaque de mesure (2) disposée à la surface de la tablette et reliée à un point intermédiaire de deux diodes (4,5) montées en série, l'une (4) des diodes étant reliée à une masse de la tablette et l'autre (5) diode étant reliée à une borne de sortie (6), les deux diodes étant disposées pour conduire de la masse vers la borne de sortie (6), le point intermédiaire étant en outre relié à une borne d'alimentation (7) par l'intermédiaire d'un condensateur (8).

5. Dispositif selon la revendication 4, caractérisé en ce que le dispositif analogique est relié à un ordinateur (15) par l'intermédiaire d'un convertisseur analogique-numérique (14).

## Claims

1. A device for detecting the position of a control member on a touch-sensitive pad (1) comprising a series of capacitive detection areas (2), a capacitive analog circuit (2,4,5,8) for attributing a detection coefficient to each area, which coefficient is a function of an amplitude of a signal emitted by said capacitive circuit, said amplitude being itself a function of the degree to which the detection area is overlapped by the control member, selecting means for selecting detection areas, and means for determining a median point (R) of said selected detection areas as weighted by their detection coefficient, characterized in that said selecting means are arranged for selecting a predetermined number of detection areas (2), having the highest degrees of overlap amongst all of the detection areas.

2. A device according to claim 1, characterized in that it comprises means for attributing an origin to one of the areas (2.1) having a high degree of overlap.

3. A device according to claim 1, characterized in that the detection coefficient applied to a detection area is inversely proportional to the degree to which said area is overlapped.

4. A device according to claim 1, characterized in that each capacitive circuit includes a measurement plate (2) disposed at the surface of the pad and connected to an intermediate point between two series-connected diodes (4,5), with one (4) of the diodes being connected to pad ground and with the other diode (5) being connected to an output terminal (6), said two diodes being disposed to conduct from ground towards the output terminal (6), with the intermediate point being additionally connected to a drive terminal( 7) via a capacitor (8).

5. A device according to claim 4, wherein the analog device is connected to a computer (15) via an analog-to-digital converter (14).

**Patentansprüche**

1. Vorrichtung zur Erfassung der Position eines Steuerorgans auf einer Tasttafel (1), umfassend eine Reihe kapazitiver Detektionsbereiche (2), eine analoge kapazitive Schaltung (2, 4, 5, 8), un jedem Bereich in Abhängigkeit von der Amplitude eines von der kapazitiven Schaltung ausgegebenen Signals einen Detektionskoeffizienten zuzuordnen, wobei diese Amplitude ihrerseits von dem Grad der Bedeckung des Detektionsbereiches durch das Steuerorgan abhängt, Auswahlmittel zur Aussonderung von Detektionsbereichen und Mittel zur Bestimmung eines Mittelpunkts (R) der mit ihrem Detektionskoeffizienten versehenen ausgesonderten Detektionsbereiche, dadurch gekennzeichnet, daß die Auswahlmittel dazu vorgesehen sind, eine vorbestimmte Anzahl von Detektionsbereichen (2), welche die höchsten Bedeckungsgrade von allen Detektionsbereichen aufweisen, auszusondern.

2. Vorrichtung nach Anspruch 1, dadurch gekennzeichnet, daß sie Mittel beinhaltet, um einem der Bereiche (2.1) mit einem hohen Bedeckungsgrad einen Nullpunkt zuzuordnen.

3. Vorrichtung nach Anspruch 1, dadurch gekennzeichnet, daß der einem Detektionsbereich zugeordnete Detektionskoeffizient umgekehrt proportional zum Bedeckungsgrad dieses Bereichs ist.

4. Vorrichtung nach Anspruch 1, dadurch gekennzeichnet, daß jede kapazitive Schaltung eine Meßplatte (2) aufweist, die an der Oberfläche der Tafel angeordnet ist und mit einem Punkt verbunden ist, der sich zwischen zwei in Serie geschalteten Dioden (4, 5) befindet, wobei eine (4) der Dioden mit einer Masse der Tafel verbunden ist, die andere Diode (5) an eine Ausgangsklemme (6) angeschlossen ist und die zwei Dioden so angeordnet sind, daß sie von der Masse zur Ausgangsklemme (6) leiten, wobei der zwischen ihnen liegende Punkt außerdem über einen Kondensator (8) mit einer Versorgungsklemme (7) verbunden ist.

5. Vorrichtung nach Anspruch 4, dadurch gekennzeichnet, daß die analoge Vorrichtung über einen Analog-Digital-Wandler (14) an einen Rechner (15) angeschlossen ist.

*Fig. 1*

*Fig. 2*

*Fig. 3*

*Fig. 4*